# EUROPEAN PATENT APPLICATION

(11) **EP 4 190 701 A1**
(43) Date of publication of application: **07.06.2023**
(21) Application number: 22208820.5
(22) Date of filing: 22.11.2022
(51) Int. Cl.: B64D 45/04, B64D 43/00, B64C 25/00

(54) **ROTATION WARNING**

(30) Priority: 30.11.2021 IN 202121055404
(71) Applicant: Airbus SAS, 31700 Blagnac (FR)
(72) Inventor: DHANDHANIA, Anmol, Bristol, BS34 7PA (GB)
(74) Representative: Pilcher, Adam

(57) **Abstract**

An improvement in aircraft performance and passenger comfort can be realised by monitoring for signs of early rotation and warning the pilot of such. By detecting when rotation has been commanded by the pilot, and the aircraft nose has started to lift off the ground, when the speed of the aircraft is below a threshold, early rotation can be determined and an auditory warning can mitigate the impact of that on aircraft performance.

## Description

### TECHNICAL FIELD

The present invention relates to a method for warning of premature rotation of an aircraft during takeoff, and a system and aircraft configured to generate a warning when conditions of premature rotation are detected.

### BACKGROUND

During takeoff, an aircraft rotates around its pitch axis so as to climb away from a runway. The pilot of the aircraft should be sure to rotate the aircraft appropriately - in terms of timing during the takeoff as well as the rate of the rotation.

If the aircraft over-rotates during the early phases of takeoff, a tailstrike can occur, where the tail impacts the runway, potentially causing damage to the aircraft. Accordingly systems exist to prevent or warn of over-rotation.

If the aircraft under-rotates during takeoff, the climb rate achieved by the aircraft may be less than is desirable for clearance of obstructions near the runway. Accordingly, systems also exist to increase the rotation rate of the aircraft or warn of under-rotation to maximise aircraft performance.

A critical speed during takeoff is the rotation speed, V_{R}, the lowest speed at which the pilot should commence rotation of the aircraft. If the pilot commands rotation of the aircraft before V_{R}, the performance of the aircraft is impaired and a longer takeoff run may be necessary. Moreover, if the pilot corrects the early rotation with a pitch down command, this can lead to a bumpy ride for any passengers or cargo in the aircraft.

Pilots are trained to calculate an appropriate V_{R} and to verbally identify when it is reached before commanding any rotation from the aircraft. It is an aim of this disclosure to provide a system and method to assist pilots by warning of early rotation of an aircraft or preventing early rotation continuing.

### SUMMARY

A first aspect of the present invention provides a method of warning of early rotation of an aircraft during takeoff, the aircraft comprising a nose landing gear and a controller, the method comprising: monitoring, at the controller, the airspeed of the aircraft, the commanded rotation rate of the aircraft, and the state of compression of the nose landing gear of the aircraft; and triggering a warning when: the airspeed of the aircraft is below a speed threshold; the commanded rotation rate of the aircraft is above a rotation threshold; and the state of compression of the nose landing gear of the aircraft is below a compression threshold.

Optionally, the airspeed of the aircraft is determined by combining a measured wind velocity with a measured ground velocity.

Preferably, the speed threshold is a predetermined rotation speed for the aircraft.

Optionally, the commanded rotation rate is determined by monitoring one or more control inputs made for the aircraft.

Optionally, the commanded rotation rate is determined by monitoring one or more control outputs sent to one or more control surfaces of the aircraft.

Optionally, the commanded rotation rate is determined by measuring the position of a control surface on the aircraft.

Preferably, the rotation threshold is 1 degrees per second.

Optionally, the nose landing gear comprises a compressible member and the state of compression of the nose landing gear is determined by monitoring the length of the compressible member.

Optionally, the state of compression of the nose landing gear is inferred by measuring the distance between the nose of the aircraft and the ground beneath it.

Preferably, the compression threshold is zero such that the threshold is met when there is no compression of the nose landing gear.

Preferably, the warning is an auditory warning in the cockpit.

Advantageously, the method may further comprise a step of inhibiting the commanded rotation rate of the aircraft during the warning.

Preferably, the method further comprises deactivating the warning on detecting an extension of a main landing gear strut extending on the aircraft.

A second aspect of the invention provides a controller for installation in an aircraft, the controller being configured to trigger a warning on detecting premature rotation of the aircraft during takeoff, the aircraft comprising a nose landing gear; the controller comprising: a first input for receiving the airspeed of the aircraft; a second input for receiving the commanded rotation rate of the aircraft; a third input for receiving the state of compression of the nose landing gear of the aircraft; and a warning output for indicating premature rotation of the aircraft during takeoff; the controller being configured to monitor the first, second and third inputs during takeoff of the aircraft, and send a signal on the warning output when: the value received on the first input is below a speed threshold; the value received on the second input is above a rotation threshold; and the value received on the third input is below a compression threshold.

Advantageously an aircraft may comprising the controller.

A third aspect of the invention provides a data carrier comprising machine-readable instructions for the operation of a controller to perform the method herein described.

### BRIEF DESCRIPTION OF THE DRAWINGS

Embodiments of the invention will now be described, by way of example only, with reference to the accompanying drawings, in which:
Figure 1a is a side elevation of an aircraft on a runway;
Figure 1b is a side elevation of an aircraft having begun rotation on a runway;
Figure 1c is a side elevation of an aircraft having just lifted off a runway;
Figure 2 is a schematic view of an aircraft adapted to act according to the disclosure;
Figure 3 is a flowchart illustrating a method according to the disclosure; and
Figure 4 is a schematic view of a nose landing gear.

### DETAILED DESCRIPTION

During the takeoff of a commercial aircraft there are a number of important threshold speeds which mark the transition of the aircraft from being ground bound to fully airborne. This disclosure is particularly concerned with the rotation speed, V_{R}. V_{R} is the speed at which the pilot should begin to apply a pitch up command to cause the aircraft to begin to rotate off the runway. Because it varies with aircraft load and environmental conditions it is typically determined on a flight-by-flight basis.

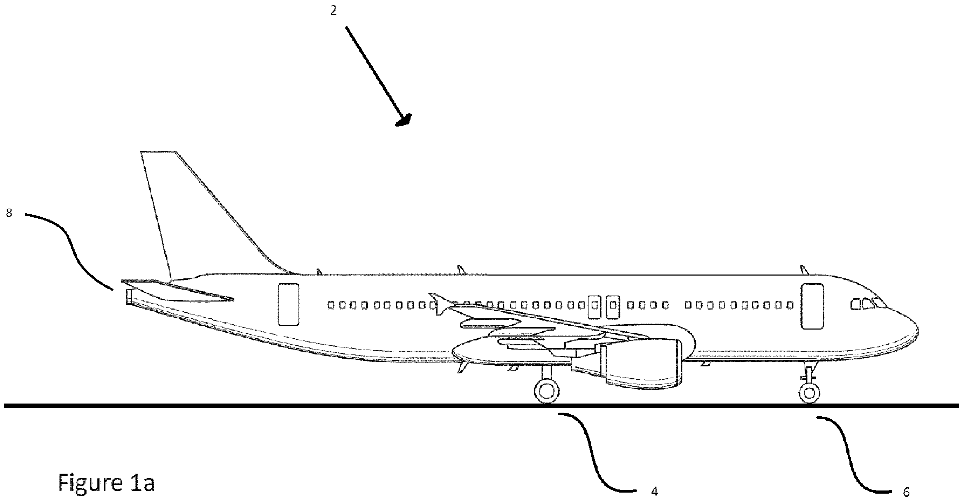

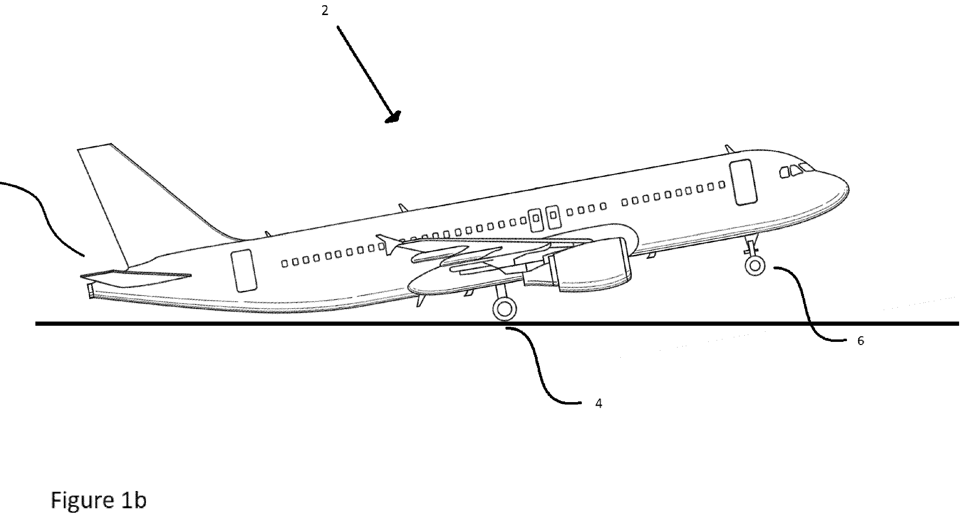

With reference to Figure 1a, a commercial airliner 2 is illustrated. Aircraft 2 has Main Landing Gear (MLG) 4, which support the majority of the weight of the aircraft. The MLG may comprise a number of sets of wheels around the centre of gravity of the aircraft 2. The aircraft 2 further has Nose Landing Gear (NLG) 6 which support the nose of the aircraft. During the initial takeoff run, when the airspeed of the aircraft 2 is below V_{R}, both the MLG 4 and NLG 6 should remain in contact with the runway. As the airspeed of the aircraft 2 increases to and beyond V_{R} then the pilot may begin to cause the aircraft to pitch up, rotating the aircraft 2 around the MLG 4 as shown in Figure 1b.

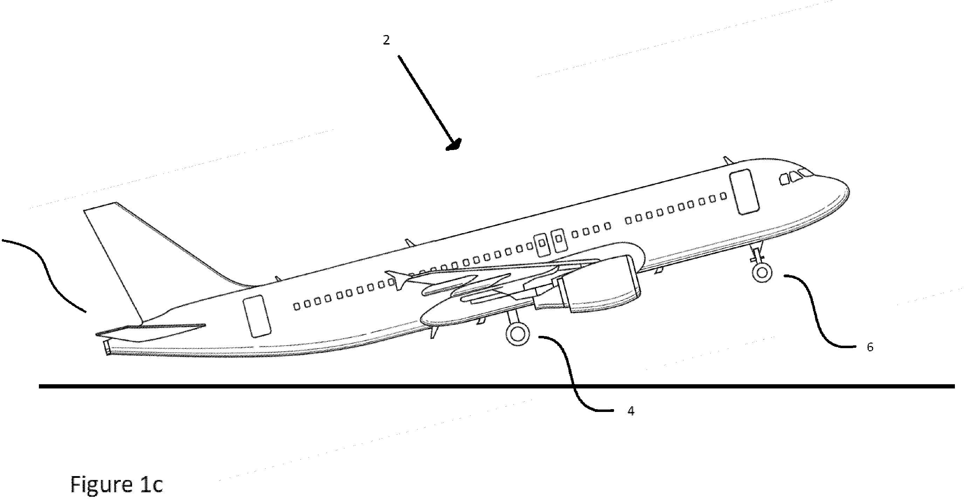

With reference to Figure 1b, the aircraft 2 is shown having begun rotation around MLG 4. NLG 6 is no longer in contact with the runway whilst MLG 4 remain in contact with the runway. A portion of the weight of the aircraft is supported by aerodynamic forces acting upon it and a portion by MLG 4. In this orientation, the tail 8 of the aircraft is brought into proximity with the runway. The aircraft continues to rotate and to accelerate past V_{R} until at least the Minimum Unstick Velocity (V_{MU}) at which the aircraft may takeoff and become fully airborne, as shown in Figure 1c. In order to ensure an appropriate margin of error, a pilot should accelerate to the takeoff safety speed, V₂, before becoming fully airborne.

Figure 1c shows the aircraft 2 as fully airborne. Both NLG 6 and MLG 4 are no longer in contact with the runway, and the weight of the aircraft 2 is supported by aerodynamic forces acting upon it. The aircraft 2 may climb into the atmosphere. In order to enable an appropriate climb rate so as to avoid obstructions around the runway, further rotation of the aircraft to achieve an optimum angle of climb may be required.

The rate of rotation and the eventual climb of the aircraft during the takeoff are very important for the proper performance of the aircraft. It is desirable that the aircraft 2 promptly adopts a sufficient rate of climb after takeoff in order to maximise its clearance of any obstacles that may be in the area around the runway. In order to achieve this the aircraft should promptly rotate to adopt an appropriate climb. Under rotation results in a reduction of such clearance, so aircraft may feature a number of systems that aid the pilot to achieve an appropriate level of rotation. For example, there may be markings on an artificial horizon or heads-up display that mark a desired climb angle that the pilot should achieve. Furthermore, systems exist that increase the rotation rate above that commanded by the pilot in order to provide satisfactory performance.

In some circumstances, a pilot may apply a backward pressure on the controls of the aircraft 2, commanding a rotation of the aircraft, before the aircraft reaches V_{R}. This might happen for a number of reasons, such as the pilot accidentally resting their hands on the controls with too much force, or the pilot mistaking the current airspeed of the aircraft. Since different aircraft may feature different response curves to control inputs, a pilot may be making what they consider a minimal input which actually amounts to a commanded rotation rate that would cause the aircraft to pitch up.

Pitching the aircraft up before V_{R} increases the drag experienced by the aircraft, increasing the length of the takeoff run required or demanding increased thrust to avoid a longer takeoff run. Furthermore if the rotation of the aircraft is unexpected by the pilot, they may react with a significant pitch down command. This could lead to uncomfortable forces experienced by the passengers or cargo during the takeoff run.

As previously mentioned a variety of systems already exist to assist the pilot of an aircraft to achieve an appropriate rate of rotation once V_{R} has passed. It's therefore desirable that any system that aims to support the pilot to avoid early rotation is one that is compatible with and does not interfere the action of existing systems.

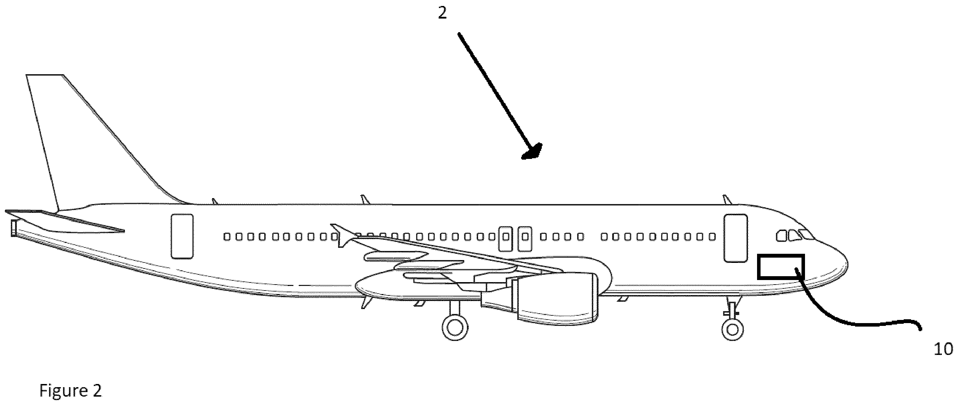

In order to address this situation a controller may be provided to monitor the aircraft condition and warn of early rotation. With reference to Figure 2 the aircraft 2 is shown as comprising such a controller 10. The controller 10 monitors data relating to the airspeed of the aircraft 2, the commanded rotation rate of the aircraft 2, and the state of compression of the nose landing gear 6 of the aircraft 2 via first, second and third inputs. The controller 10 is adapted to trigger a warning via a warning output upon determining that early rotation is taking place. The controller 10 might be a new piece of hardware which is part of the avionics suite, or could be implemented as software using existing hardware.

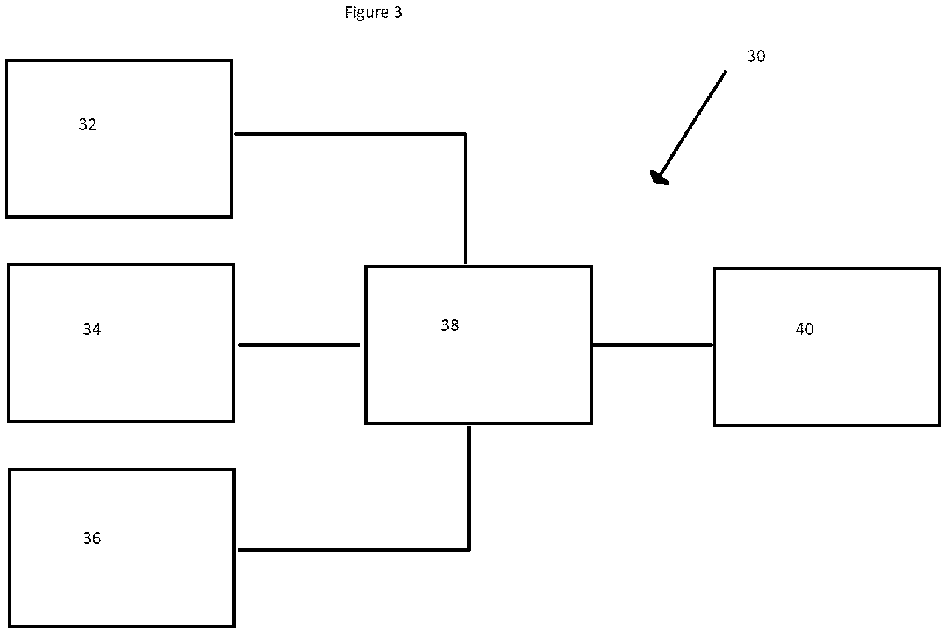

The controller 10 carries out the method 30 illustrated in Figure 3. The method 30 comprises monitoring 32 the airspeed of the aircraft 2, monitoring 34 the commanded rotation rate of the aircraft 2, and monitoring 36 the state of compression of the nose landing gear 6 of the aircraft. At comparison block 38, the airspeed of the aircraft 2 is compared to a speed threshold, the commanded rotation rate of the aircraft 2 is compared to a rotation threshold, and the state of compression of the nose landing gear 6 is compared to a compression threshold. When it is determined that the airspeed is below the speed threshold, the commanded rotation rate is above a rotation threshold, and the state of compression of the nose landing gear of the aircraft is below the compression threshold, then at block 40 a warning is triggered, which may be for alerting the pilot of the early rotation of the aircraft 2.

By monitoring 34 the commanded rotation rate of the aircraft 2 as well as monitoring 36 the state of compression of the nose landing gear 6 of the aircraft, false positives can be avoided. Such false positives might be caused on the one hand by momentary or minor commanded rotation that does not provide sufficient force to rotate the aircraft 2. On the other hand irregularities in the runway or momentary gusts of wind may cause the nose landing gear 6 to temporarily extend without any rotation of the aircraft 2 being commanded by the pilot.

The step of monitoring 32 the airspeed of the aircraft may be carried out by monitoring the airspeed indicated by a pitot tube or similar as is commonly used on an aircraft 2. Alternatively, the controller 10 may monitor the airspeed determined by the avionics system of the aircraft 2, which may be determined based on comparing the values from multiple pitot tubes or similar to provide redundancy.

Further alternatively, the airspeed of the aircraft 2 may be determined by calculation. By combining the wind velocity around the aircraft 2 and the ground velocity of the aircraft 2 (taking into account their direction as well as their speed) then the airspeed, or an approximation thereof, can be calculated. The wind velocity might be an approximate value based on the average or predicted wind speed at the airport, or might be that measured at a weather data source. The ground velocity of the aircraft might be measured using a satellite navigation system; by monitoring the speed of the aircraft across the runway; or by using an inertial reference system.

The speed threshold is preferably V_{R}, calculated by the pilots based on the usual factors such as the weight of the aircraft, cargo, passengers and fuel, the air temperature and pressure and so on. This may be determined by the pilots before takeoff and programmed in to the controller 10 or another system within the aircraft 2. Optionally the speed threshold may be offset from V_{R} in order to avoid false alarms due to fluctuations in the monitored speed. Alternatively, the speed threshold may be predetermined for that aircraft type as a minimum likely V_{R}.

The step of monitoring 34 the commanded rotation rate of the aircraft 2 may be carried out by monitoring the control inputs made by the pilot. For example, the angle of or pressure exerted on the control column, side stick or equivalent may be monitored. Alternatively, in modern fly-by-wire aircraft the control inputs made by a pilot may be altered by a control system in order to generate appropriate control outputs for sending to the control surfaces (or effectors coupled thereto) of the aircraft. In such a system the commanded rotation rate of the aircraft may be determined by monitoring one or more of such control outputs. Further alternatively, the commanded rotation rate of the aircraft 2 may be monitored by measuring the position of a control surface of the aircraft, such as an elevator, canard or other similar control surface that can be deflected to bring about a change of pitch of the aircraft.

The rotation threshold may be simply set at a predetermined value, for example 1 degrees per second, or a value between 0.5 and 3 degrees per second. Alternatively, the rotation threshold may vary based on the runway the aircraft 2 is to take off from. For example, the rotation threshold may be determined based on the proximity to the runway of any obstructions near the airport. If there are no such obstructions, the rotation threshold may be lower due to the absence of the aircraft needing to promptly reach a particular altitude for obstacle avoidance. Further alternatively, the rotation threshold may vary based on the airspeed of the aircraft, being very low at low airspeeds and increasing as the aircraft approaches V_{R}.

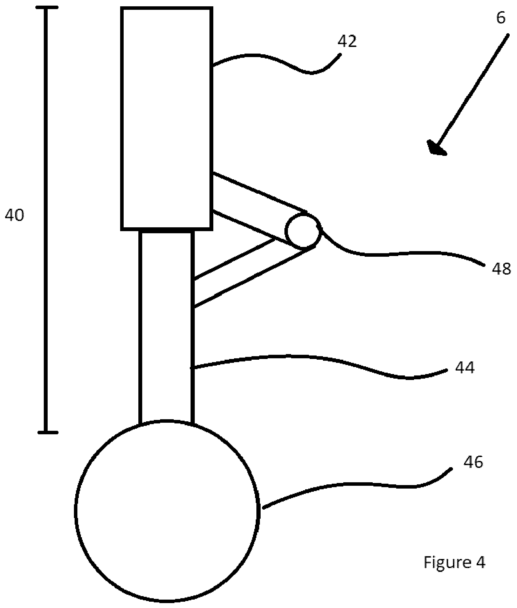

The step of monitoring 36 the state of compression of the nose landing gear 6 of the aircraft 2 may be carried out in a variety of ways. With reference to Figure 4, a typical aircraft nose landing gear 6 comprises a compressible oleo-pneumatic strut 40, comprising an upper strut 42 that receives a lower strut 44 in a telescoping fashion. One or more wheels 46 is attached at the bottom of lower strut 44. The landing gear 6 further comprises a torque link, 48, coupled to the upper strut 42 and the lower strut 44 for preventing or limiting rotation between them around their common axis. The torque link 48 is hinged so as to permit the telescoping action of the compressible strut 40.

When the weight of the aircraft 2 is partially supported by the nose landing gear 6, compressible strut 40 is compressed, with lower strut 44 being partially received within the upper strut 42. After takeoff, the weight of the lower strut 44 and wheel 46 naturally causes the compressible strut 40 to extend fully such that the compressible strut 40 is not compressed.

Instrumentation can be provided on the landing gear 6 to measure the length of the compressible strut 40 and thereby derive the state of compression of the nose landing gear 6. There are a number of ways this could be achieved, for example measuring the pressure within the compressible oleo-pneumatic strut 40, or the amount of the lower strut 44 that is received within the upper strut 42. The distance between the wheel 46 or lower strut 42 and the body of aircraft 2 could be measured using laser or radio range finding or similar. The relative angles of the members of the torque link 48 could be measured to determine the length of the compressible strut 40. Many of these techniques could also be adapted for use on a nose landing gear 6 that does not feature an oleo-pneumatic strut as the compressible member 40 but instead features another compressible member such as a compressible resilient member.

Alternatively, the state of compression of the nose landing gear 6 could be inferred by measuring the distance between the nose of the aircraft 2 and the runway, for example using a laser or radio range finder. Further alternatively this distance could be measured with respect to the altitude of the nose of the aircraft 2, for example using a conventional or radar altimeter.

As shown in Figure 3, when all of the monitored values 32, 34, 36 have crossed their respective thresholds at comparison block 38, a warning is triggered at block 40. The warning may take the form of an audible signal such as a buzzer or alarm. In addition, there may be a visual warning such as an illuminated warning light or notification on a display. Furthermore, vibration of the controls could be used to warn the pilot of the early rotation of the aircraft.

In some situations, it may be desirable for the response to an early rotation of the aircraft 2 to go beyond a warning. The controller 10 may instruct an inhibition in the positive pitch response of the aircraft to avoid further rotation of the aircraft. This could be by reducing the responsiveness of the pitch controls in the pitch up direction, or by adding an offset to the pitch inputs provided by the pilot.

Since the controller 10 may be implemented by an existing piece of hardware in the aircraft 2 operating in line with this disclosure by virtue of new software, the software may be provided as machine readable instructions on a data carrier to cause operation of a controller 10 of the aircraft 2 to perform the method 30. The data carrier may be any appropriate data carrier having a memory capable of storing the machine readable instructions. The data carrier may be embedded in the aircraft 2 in use.

Although the invention has been described above with reference to a commercial airliner, any aircraft that rotates during a takeoff run may benefit from the invention, including light aircraft, cargo aircraft, and autogyro aircraft.

Although the invention has been described above with reference to one or more preferred examples or embodiments, it will be appreciated that various changes or modifications may be made without departing from the scope of the invention as defined in the appended claims.

Where the term "or" has been used in the preceding description, this term should be understood to mean "and/or", except where explicitly stated otherwise.

## Claims

1. A method of warning of early rotation of an aircraft during takeoff, the aircraft comprising a nose landing gear and a controller, the method comprising:
monitoring, at the controller, the airspeed of the aircraft, the commanded rotation rate of the aircraft, and the state of compression of the nose landing gear of the aircraft; and
triggering a warning when:
the airspeed of the aircraft is below a speed threshold;
the commanded rotation rate of the aircraft is above a rotation threshold; and
the state of compression of the nose landing gear of the aircraft is below a compression threshold.

2. A method according to claim 1, wherein the airspeed of the aircraft is determined by combining a measured wind velocity with a measured ground velocity.

3. A method according to claim 1 or 2, wherein the speed threshold is a predetermined rotation speed for the aircraft.

4. A method according to any preceding claim, wherein the commanded rotation rate is determined by monitoring one or more control inputs made for the aircraft.

5. A method according to any one of claims 1 to 4, wherein the commanded rotation rate is determined by monitoring one or more control outputs sent to one or more control surfaces of the aircraft.

6. A method according to any one of claims 1 to 4, wherein the commanded rotation rate is determined by measuring the position of a control surface on the aircraft.

7. A method according to any preceding claim, wherein the rotation threshold is 1 degrees per second.

8. A method according to any preceding claim, wherein the nose landing gear comprises a compressible member and the state of compression of the nose landing gear is determined by monitoring the length of the compressible member.

9. A method according to any one of claims 1 to 7, wherein the state of compression of the nose landing gear is inferred by measuring the distance between the nose of the aircraft and the ground beneath it.

10. A method according to any preceding claim, wherein the compression threshold is zero such that the threshold is met when there is no compression of the nose landing gear.

11. A method according to any preceding claim, wherein the warning is an auditory warning in the cockpit.

12. A method according to any preceding claim, further comprising a step of inhibiting the commanded rotation rate of the aircraft during the warning.

13. A method according to any preceding claim, further comprising deactivating the warning on detecting an extension of a main landing gear strut extending on the aircraft.

14. A controller for installation in an aircraft, the controller being configured to trigger a warning on detecting premature rotation of the aircraft during takeoff, the aircraft comprising a nose landing gear; the controller comprising:
a first input for receiving the airspeed of the aircraft;
a second input for receiving the commanded rotation rate of the aircraft;
a third input for receiving the state of compression of the nose landing gear of the aircraft; and
a warning output for indicating premature rotation of the aircraft during takeoff;
the controller being configured to monitor the first, second and third inputs during takeoff of the aircraft, and send a signal on the warning output when:
the value received on the first input is below a speed threshold;
the value received on the second input is above a rotation threshold; and
the value received on the third input is below a compression threshold.

15. An aircraft comprising the controller of claim 14.

16. A data carrier comprising machine-readable instructions for the operation of a controller to perform the method according to any one of claims 1 to 13.
